# DEMANDE DE BREVET EUROPEEN

(11) **EP 2 653 348 A1**
(43) Date de publication de la demande: **23.10.2013**
(21) Numéro de dépôt: 13158587.9
(22) Date de dépôt: 11.03.2013
(51) Int. Cl.: B60R 13/10

(54) **Bande rétro-réfléchissante pour plaque d'identification et plaque d'immatriculation**

(30) Priorité: 20.04.2012 FR 1253629
(71) Demandeur: Richard, Norbert, 74120 Megeve (FR)
(72) Inventeur: Richard, Norbert, 74120 Megeve (FR)
(74) Mandataire: Cabinet Laurent & Charras

(57) **Abrégé**

Bande (1) réalisée en matériau rétro-réfléchissant pour plaques d'identification ou d'immatriculation pour véhicules automobiles. La bande présente une zone (8) détachable ménagée au niveau de l'un de ses bords principaux.

## Description

### DOMAINE DE L'INVENTION

L'invention concerne le domaine des plaques d'immatriculation pour véhicules automobiles, qu'il s'agisse de voitures ou de motos.

Plus spécifiquement, l'invention concerne l'un des éléments constitutif des plaques d'immatriculation dites de nouvelle génération, mettant en oeuvre un matériau plastique rétro-réfléchissant.

### ART ANTERIEUR

Depuis quelques années, sont apparues des plaques d'immatriculation dites « nouvelle génération » constituées d'une plaque externe rigide transparente, contre la face interne de laquelle est apposée une bande réalisée en un matériau rétro-réfléchissant portant les caractères alphanumériques obligatoires, voire des éléments supplémentaires type numéro du département et logo d'identification de la région du propriétaire du véhicule en question.

Bien évidemment, tant les dimensions de ces plaques que celles de caractères obligatoires alphanumériques doivent répondre à des normes, en l'espèce les normes UTAC.

En outre, cette bande rétro-réfléchissante peut également comporter des mentions facultatives, telles que par exemple la raison sociale du concessionnaire automobile ayant vendu le véhicule en question.

La réalisation des informations portées par cette bande rétro-réfléchissante s'effectue au moyen d'une imprimante de type thermique de manière en soi connue.

Ce faisant, en fonction des désidératas du propriétaire du véhicule d'une part, et en raison des normes à respecter d'autre part, il s'avère nécessaire de disposer de différents stocks de bandes rétro-réfléchissantes comportant ou non une telle zone supplémentaire, dédiée aux mentions facultatives du type raison sociale. Corollairement, en raison même de la position de telles mentions facultatives, deux types d'imprimante thermique sont donc nécessaires pour permettre l'impression de ladite bande munie ou non de cette zone.

On conçoit de fait aisément le surenchérissement des coûts pour, soit les fabricants de plaques d'immatriculation, soit les concessionnaires et autres garagistes pour la réalisation de telles plaques d'immatriculation nécessitant de fait différents stocks de bandes rétro-réfléchissantes, et au moins deux types, voir quatre types d'imprimantes (pour automobiles et pour motos, dont il est rappelé que le format des plaques diffère de celui des véhicules automobiles).

L'objectif de la présente invention est de pallier cette difficulté en ne proposant, respectivement pour les voitures et pour les motos, qu'un seul type de bande rétro-réfléchissante, et corollairement un seul type d'imprimante.

### EXPOSE DE L'INVENTION

L'invention vise donc une bande rétro-réfléchissante pour plaques d'identification ou d'immatriculation pour véhicules automobiles présentant une zone détachable ménagée au niveau de l'un de ses bords principaux.

En d'autres termes, les plaques d'immatriculation, et corollairement les bandes rétro-réfléchissantes qu'elles comportent étant traditionnellement de forme rectangulaire, selon l'invention, l'un des bords de la bande rétro-réfléchissante correspondant à la longueur de celle-ci est détachable. Ce faisant, cette forme de réalisation rend possible la mise en oeuvre d'un seul type de bande rétro-réfléchissante, puisque cette bande détachable est susceptible, et plus exactement est dédiée pour recevoir les informations non-obligatoires du type raison sociale du concessionnaire.

Selon l'invention, le caractère détachable de cette bande est obtenu, soit en réalisant une découpe à mi-chair, soit en effectuant des découpes pleine épaisseur mais en ménageant des ponts sécables à intervalle régulier, cette découpe étant obtenue de manière traditionnelle par les techniques de découpe largement maîtrisées.

Selon l'invention, dans le cadre plus particulier des bandes rétro-réfléchissantes pour moto, celles-ci présentent une pré-pliure le long de la médiane de la bande parallèle au bord muni de la bande détachable. Ce faisant, la réalisation des caractères d'identification de ladite bande est obtenue en deux étapes au niveau d'une seule imprimante, en prenant le soin de plier ladite bande selon cette médiane.

### BREVE DESCRIPTION DES FIGURES

La manière dont l'invention peut être réalisée et les avantages qui en découlent, ressortiront mieux des exemples de réalisation qui suivent donnés à titre indicatif, et non limitatif à l'appui des figures annexées.

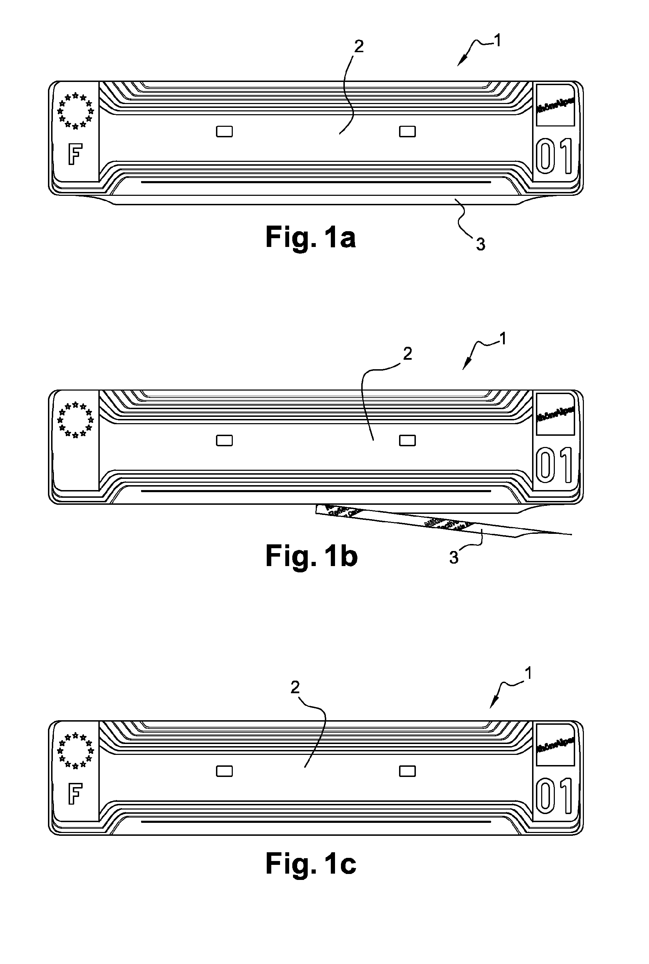

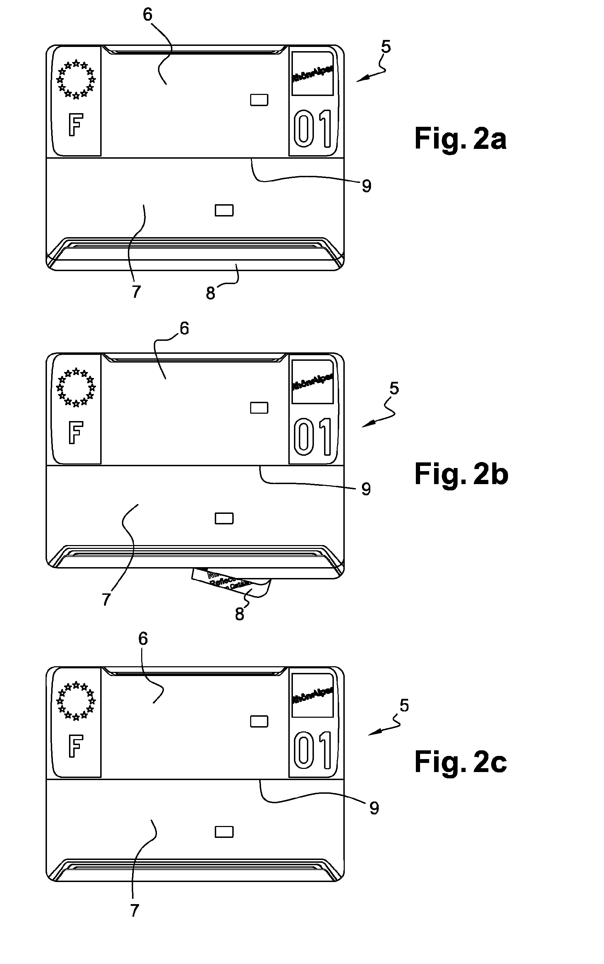

Les figures 1a, 1b et 1c illustrent une bande rétro-réfléchissante selon l'invention pour voiture automobile avant et après enlèvement de la bande détachable. Les figures 2a, 2b et 2c sont des vues similaires aux figures 1a, 1b et 1c pour des motos.

### DESCRIPTION DETAILLEE DE L'INVENTION

On a donc représenté en relation avec les figures 1a, 1b et 1c une bande rétro-réfléchissante (1) pour véhicules automobiles, et en l'espèce pour voitures.

Cette bande est typiquement réalisée avec un matériau intégrant des microbilles de verre ou de plastique, et commercialisé par 3M ou encore par NIPPON CARBIDE. Comme son nom l'indique, elle est dotée de propriétés rétro-réfléchissantes, c'est-à-dire qu'elle réfléchit la lumière une fois éclairée, ce, afin de satisfaire aux normes UTAC en vigueur.

Selon l'invention, cette bande rétro-réfléchissante (1) comporte tout d'abord une zone principale (2), au sein de laquelle sont réalisées par impression thermique les caractères alphanumériques traditionnels d'une plaque d'immatriculation, et ensuite, au niveau de son bord inférieur, une zone (3), destinée à recevoir, également par impression thermique par exemple, des mentions facultatives du type raison sociale ou nom commercial du concessionnaire ou du garagiste.

Selon l'invention, cette zone inférieure (3) est détachable du reste de la bande (1). On a représenté sur la figure 1b ladite zone inférieure (3) en cours de détachement.

Une fois la bande complètement enlevée (figure 1c) on dispose d'une bande de dimension standardisée, et par exemple 111 x 520 millimètres.

Lorsqu'en revanche on souhaite faire figurer une mention non-obligatoire de type raison sociale, on dispose de la bande illustrée dans la figure 1a, susceptible ainsi de recevoir lesdites mentions non obligatoires.

Les figures 2a à 2c sont analogues aux figures 1a à 1c, à la réserve près cependant que s'agissant d'une bande pour plaque moto, celle-ci (5) est de forme et de dimension différentes. En l'espèce, outre la zone détachable inférieure (8), la bande (5) présente une pré-pliure (9) réalisée selon sa ligne médiane parallèle au côté de la bande rétro-réfléchissante munie de la zone détachable.

Cette ligne médiane de pré-pliure (9) permet, lors de l'impression thermique de ladite bande, l'utilisation d'une seule imprimante pour imprimer le haut (6), puis le bas (7) de la bande rétro-réfléchissante, puisqu'aussi bien ces deux zones (6) et (7) présentent la même largeur.

Après impression des deux zones, et si le propriétaire de la moto ne souhaite pas de mentions facultatives, il suffit alors de détacher la zone correspondante (8) postérieurement à l'impression de la bande rétro-réfléchissante sans gêner l'impression puisqu'alors, la largeur de ladite zone est préservée.

Le caractère détachable des zones (3) et (8) résulte de différentes techniques de découpes aujourd'hui largement maitrisées, et dont il n'est dès lors pas utile de revenir plus en détail. Ainsi, la découpe de la bande à mi-chair peut être envisagée, voire, la découpe pleine épaisseur en ménageant à intervalles réguliers de zones non découpées, constituant autant de ponts sécables.

On conçoit tout l'intérêt de l'invention qui permet, comme déjà dit, de réduire les stocks de bandes réalisées en matériau rétro-réfléchissant et d'un coût élevé, et de réduire le parc d'imprimantes thermiques.

## Revendications

1. Bande (1, 5) réalisée en matériau rétro-réfléchissant pour plaques d'identification ou d'immatriculation pour véhicules automobiles, ***caractérisée* en ce qu'**elle présentant une zone (3, 8) détachable ménagée au niveau de l'un de ses bords principaux.

2. Bande (1, 5) réalisée en matériau rétro-réfléchissant pour plaques d'identification ou d'immatriculation pour véhicules automobiles selon la revendication 1, ***caractérisée* en ce que** le caractère détachable de la zone (3, 8) est obtenu, soit en réalisant une découpe à mi-chair, soit en effectuant des découpes pleine épaisseur au sein de la bande (1, 5) mais en ménageant des ponts sécables à intervalle régulier.

3. Bande (5) réalisée en matériau rétro-réfléchissant pour plaques d'identification ou d'immatriculation pour véhicules automobiles selon l'une des revendications 1 et *2,* ***caractérisée* en ce qu'**elle présente une pré-pliure (9) le long de la médiane de ladite bande parallèle au bord muni de la zone détachable (8).
